# EUROPÄISCHE PATENTANMELDUNG

(11) **EP 1 712 141 A2**
(43) Veröffentlichungstag der Anmeldung: **18.10.2006**
(21) Anmeldenummer: 06090049.5
(22) Anmeldetag: 07.04.2006
(51) Int. Cl.: A24C 5/35

(54) **Räummittel zum Entfernen von in einem Kanal vorhandenen Artikeln mit einem Räumkörper**

(30) Priorität: 15.04.2005 DE 102005018302
(71) Anmelder: Hauni Maschinenbau AG, 21033 Hamburg (DE)
(72) Erfinder: Müller, Thomas, 20259 Hamburg (DE)
(74) Vertreter: Wenzel & Kalkoff

(57) **Zusammenfassung**

Ein Räummittel zum Entfernen von in einem Kanal vorhandenen Artikeln wird durch wenigstens zwei in Transportrichtung wirkverbunden aneinandergereihte, einer Richtungsänderung folgende Gliedelemente (10) gebildet. Insbesondere ist in einem solchen Gliedelemente-Verbund (1) ein Räumkörper (11) mit wenigstens einem Führungskörper (12, 13) wirkverbunden. Das Räummittel kommt zum Entfernen von stabförmigen Artikeln der tabakverarbeitenden Industrie aus Transportstrecken insbesondere zwischen einer Herstellungsmaschine und einer Packmaschine zum Einsatz, zum Beispiel um die Strecke für einen Markenwechsel leerzufahren.

## Beschreibung

Die Erfindung betrifft ein Räummittel zum Entfernen von in einem Kanal vorhandenen Artikeln mit einem Räumkörper, der durch den Kanal bewegbar und zumindest abschnittsweise im Querschnitt elastisch deformierbar ausgebildet ist. Die Erfindung bezieht sich auch auf ein entsprechendes Räummittel, das nicht notwendig elastisch ausgebildet ist, um stabförmige Artikel der tabakverarbeitenden Industrie aus einem die Artikel zwischen Einrichtungen einer Produktionsanlage fördernden Transportkanal auszuräumen, der wenigstens eine nach oben und/oder unten gerichtete Kanal-Förderstrecke, eine dazu quer gerichtete Kanal-Förderstrecke und einen Umlenkungsabschnitt zwischen den Strecken aufweist sowie mit Förderelementen ausgestattet ist, die die stabförmigen Artikel längs der Kanalstrecken fortbewegen. Das eine Funktionseinheit bildende Räummittel wird genutzt, um eine Produktions- oder Förderstrecke leer zu fahren. Dies wird erforderlich, wenn zwar die Zufuhr von Artikeln an den Transportkanal gestoppt worden ist, jedoch in dem Kanal an einer oder mehreren Stellen Artikel trotz laufender Förderelemente zurückbleiben.

Insbesondere auf dem Transportweg von stabförmigen Artikeln der tabakverarbeitenden Industrie in einer Zufuhr- und Übertragungseinrichtung (Rod Transfer System RTS) und einem anschließenden Speicher (Flexible Mass Follow Reservoir FMR) müssen die Strecken leergefahren werden, um eine Trennung zwischen unterschiedlichen Losen, Chargen und/oder Beschickungen zu erhalten. Zum Beispiel muss verhindert werden, dass bei einem Markenwechsel von Zigaretten eine Produktmischung stattfindet.

Aus WO 03/053178 A1 ist es bekannt, den Transportkanal zwischen einer Produktionseinrichtung (Maker) und einer Verpackungseinrichtung (Packer) mit einem in dem Kanal laufenden Wagen zu reinigen, der allseitig Laufrollen aufweist, die über Bandführungen und Hebelkonstruktionen derart verbunden sind, dass sich die Form des Wagens an den zu durchlaufenden Kanalquerschnitt anpasst. Der Wagen ist mit einem Eigenantrieb zum Antrieb der Laufrollen ausgestattet. Ein solcher Rollenwagen zum Durchfahren eines Kanals baut mechanisch sehr aufwendig und erfordert zum Betrieb besondere Maßnahmen der Steuerung und Antriebsversorgung. Infolgedessen ist eine solche Reinigungseinrichtung kostspielig, störanfällig und nur mit besonderem technischem Aufwand zu betreiben. In einer anderen bekannten Einrichtung (EP 1 020 126) wird einem Zigarettenförderer zum Zigarettentransport ein Hilfsorgan in Form einer innerhalb eines Zigarettenkanals bewegbaren Anlageplatte zugeordnet, die außerhalb des Zigarettenkanals auf einer mit diesem verlaufenden Außenführung verfahrbar gelagert ist. Eine solche Einrichtung erfordert eine besondere Konstruktion der Förderstrecke mit ihren Förderelementen und kann nur als aufwendiger maschinengebundener Bestandteil einer Fördereinrichtung vorgesehen werden.

Demgegenüber liegen der Erfindung die Ziele zugrunde, ein Räummittel der bezeichneten Art zu schaffen, das als eigenständig handhabbare Einrichtung besonders einfach baut, einfach in Förderstrecken einsetzbar und aus diesen entnehmbar ist und betriebszuverlässig insbesondere um Ecken von Umlenkstellen durch einen von Artikeln zu befreienden Transportkanal mittels der Förderelemente des Kanals getrieben wird. Auch soll das Räummittel kostengünstig und raumsparend zur Verfügung stehen.

Die Ziele der Erfindung werden bei einem Räummittel zum Entfernen von in einem Kanal vorhandenen Artikeln mit einem Räumkörper, der durch den Kanal bewegbar und zumindest abschnittsweise querschnittelastisch deformierbar ausgebildet ist, dadurch erreicht, dass der Räumkörper mit wenigstens einem Führungskörper wirkverbunden ist. In einer Ausführung, bei der eine elastische Deformierbarkeit des Querschnitts auch entfallen kann, wird das Räummittel durch einen Gliedelemente-Verbund gebildet, der mittels der für den Produkttransport vorgesehenen Förderelemente in dem Transportkanal förderbar ist und durch wenigstens zwei in Transportrichtung wirkverbunden aneinandergereihte, einer Richtungsänderung folgende Gliedelemente gebildet ist. In der Ausführung mit elastischem Querschnitt erreicht man auf einfache Weise eine kraftschlüssige Mitnahme des Räumkörpers im entsprechend dimensionierten Kanalquerschnitt zwischen Förderelementen. Die Wirkverbindung des Räumkörpers mit wenigstens einem Führungskörper führt zu einer besonders einfachen Anordnung und Ausbildung des Räummittels. Die Aufteilung in Räumkörper und Führungskörper sowie deren separate Ausbildung im Verbund führen auch zu einem kostengünstigen und betriebssicheren Räummittel, das einerseits zurückgebliebene Artikel zuverlässig entfernt und andererseits insbesondere auch an Umlenkstellen durch den Kanal geführt wird, ohne beschädigt zu werden und selbst hängen zu bleiben. Die Auftrennung in bzw. Abgrenzung zwischen Räumkörper und Führungskörper bieten weiterhin den Vorteil, dass das Räummittel im Kanal den Bereich einer Übergabestelle zwischen Förderelementen problemlos passiert und Artikel, die bei Produktionsunterbrechung insbesondere an solchen Übergabestellen liegen bleiben, von diesen abführt. Eine besonders einfache Bauform erhält man durch den Gliedelemente-Verbund. Es handelt sich um eine zweckmäßig sogar nur aus zwei oder drei Gliedelementen bestehende einfach-reihige Kette. Mittels der erfindungsgemäßen Aneinanderreihung bzw. Verkettung der Einzelelemente wird erreicht, dass diese im Kanal an aufeinanderfolgenden Stellen im Eingriff mit Förderelementen und/oder einer Kanalwandung stehen, um durch Zug und/oder Schub transportiert und zudem schon aufgrund der Verbundlänge eine sichere Führung zu gewährleisten.

Vorzugsweise weist das Räummittel drei Gliedelemente auf. Zweckmäßig bilden wenigstens die in Transportrichtung vorn und hinten zu liegen kommenden Gliedelemente passive Antriebselemente, die als solche von den Kanalförderelementen erfasst werden. Wenigstens das mittlere Gliedelement gewährleistet dabei die Überbrückung einer zwischen Förderelementen antriebslosen Strecke von zum Beispiel 50 bis 60 mm. Auch weist wenigstens das mittlere Gliedelement eine Formgebung auf, die an einem Umlenkungsabschnitt mit der Innenecke und/oder der Außenecke des Kanals korrespondiert. In bevorzugter Bauform werden sämtliche Gliedelemente übereinstimmend ausgebildet.

In besonderer Gestaltung der Erfindung werden wenigstens ein Gliedelement, vorzugsweise wenigstens das in Förderrichtung vordere Gliedelement als Räumkörper und dieser sowie wenigstens ein hinteres Gliedelement als den Verbund durch wenigstens einen Umlenkabschnitt führende Führungskörper ausgebildet.

Eine Führungsfunktion des Führungskörpers kann vorteilhaft durch eine besondere Formgebung bewirkt werden. Zweckmäßig wird eine Formkontur ausgebildet, die das Kippen der Gliedelemente in die Umlenkrichtung eines Umlenkungsabschnittes durch wenigstens eine Ausnehmung und/oder Anformung am Körper des Gliedelements begünstigt. Vorteilhaft weist wenigstens ein Gliedelement eine konkave Führungsfläche auf, die an eine konvexe Krümmung eines inneren Umlenkungs-Eckabschnitts angepasst ist. Gleichermaßen ist es besonders vorteilhaft, wenn wenigstens ein Gliedelement eine konvexe Führungsfläche aufweist, die an eine konkave Krümmung eines äußeren Umlenkungs-Eckabschnitts angepasst ist. Wenigstens ein Gliedelement, das mit Förderelementen und/oder Kanalwänden in Eingriff gelangt, kann mit einer Formkontur ausgebildet werden, die den Verbund durch den wenigstens einen Umlenkungsabschnitt mit einer Richtungsänderung bis mindestens 90° führt.

Grundkörper der Gliedelemente lassen sich zweckmäßig als gewichtsmäßig leichte Teile ausbilden. Vorteilhaft wird das Gliedelement aus einem formstabilen elastischen Schaumstoffmaterial gebildet, das vorzugsweise an Führungsflächen mit einem Gleitbelag versehen ist. Das Schaumstoffmaterial hat auch den Vorteil, dass das Gliedelement im dem Kanalquerschnitt entsprechenden Querschnitt elastisch deformierbar ausgebildet ist. Das Gliedelement kann aber auch aus einem elastischen Profilkörper vorzugsweise als extrudiertes Formstück gebildet sein. Besondere Führungseigenschaft wird dem Räummittel zweckmäßig dadurch verliehen, dass wenigstens ein, vorzugsweise das vordere Gliedelement mit einer Gewichtsmassenverteilung ausgestattet ist, die es im geförderten Verbund in die Umlenkrichtung des wenigstens einen Umlenkabschnittes kippen lässt. Vorteilhaft wird die Gewichtsmasse durch wenigstens ein vorzugsweise metallisches Block- und/oder Stabelement, das in ein den Gliedelementkörper bildendes Leichtmaterial eingelassen ist, konzentriert und zu diesem Zweck insbesondere aufgeteilt.

Je nach Einsatzzweck, -ort und/oder -funktion können zwei Gliedelemente in Reihe kettenartig miteinander verbunden sein. Eine Form der Kettenverbindung zwischen zwei Gliedelementen kann einfach in wenigstens einem die Gliedelemente verbindenden Bandstück od.dgl. bestehen. Andererseits kann ein solches mittelbares Verbindungsglied durch wenigstens ein starres Steg- oder Zapfenelement z.B. in Form einer Gelenkplatte gebildet werden, an dessen Enden die Gliedelemente angelenkt werden. Zwei Gliedelemente können auch direkt gelenkig miteinander verbunden werden, in dem sie mittels Gelenk formschlüssig ineinandergreifen. Wenngleich man grundsätzlich eine unverlierbare Verbindung zwischen zwei Gliedelementen vorsehen wird, kann der erfindungsgemäße Wirkverbund auch dadurch zustande gebracht werden, dass zwei oder mehr Gliedelemente in einfacher Reihe zwischen wenigstens zwei Elementen nur zu einem aneinander anstoßenden, ein gegenseitiges Abkippen erlaubenden Anliegen ohne feste Verbindung vorgesehen sind.

Zweckmäßig bildet die Kettenverbindung zwischen benachbarten Gliedelementen einen Ablenkungswinkel bis mindestens 90° aus. Eine besonders vorteilhafte Maßnahme besteht darin, die Kettenverbindung zwischen benachbarten Gliedelementen zum Zulassen einer Relativbewegung zwischen diesen in wenigstens zwei Raumrichtungen auszubilden, um die Richtungsänderung des Räummittels nicht nur in Transportrichtung, sondern wenigstens auch zur Anpassung an eine Neigungsänderung des Kanals in Querrichtung zu gewährleisten.

Weitere bevorzugte Merkmale, Ausführungsformen und Möglichkeiten der Erfindung gehen aus Unteransprüchen und der Beschreibung hervor. Besonders bevorzugte Ausführungsbeispiele werden anhand der Zeichnung näher erläutert. In der Zeichnung zeigen
- Fig. 1: in Seitenansicht einen zwischen Produktions- und Verpackungslinie platzierten Speicher (FMR) mit einer Zufuhreinrichtung (RTS),
- Fig. 2 und 3: ein erfindungsgemäßes Räummittel in axonometrischer Ansicht sowie in stirnseitiger Seitenansicht von Elementen gemäß einer Ausführungsform,
- Fig. 4: einen Umlenkbereich I in Fig. 1 und
- Fig. 5: einen Übergabebereich II in Fig. 1.

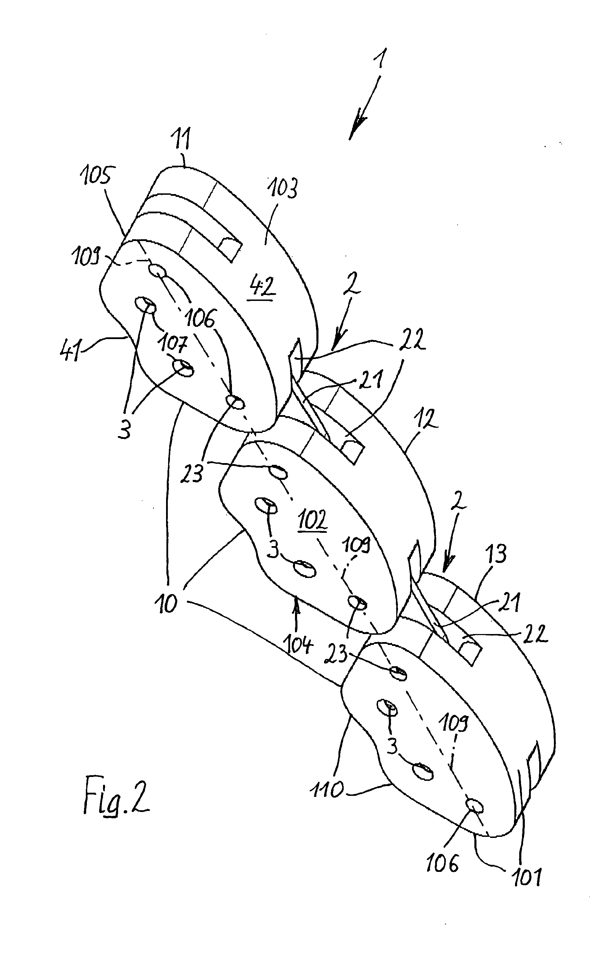

Fig. 1 zeigt eine Anlage, in der ein erfindungsgemäßes Räummittel zum Beispiel zum Einsatz gelangt. Das Bezugszeichen 7 bezeichnet eine FMR-Einrichtung, die im Ausführungsbeispiel durch einen First-in-First-out-(FiFo-)Speicher gebildet ist. Es handelt sich um einen sogenannten Flaschenzugspeicher mit fünf Förderebenen 71. Der Speicher 7 wird über eine RTS-Zufuhreinrichtung 6 beschickt. Diese weist einen Eingang 61 auf, dem von einer nicht-dargestellten Produktionslinie (Maker) stabförmige Artikel der tabakverarbeitenden Industrie wie Zigaretten oder Filterstäbe zugeführt werden. Der Speicher 7 weist einen Ausgang 72 auf, der mit einer nicht-dargestellten Verpackungslinie (Packer) verbunden ist. Der Speicher 7 dient in üblicher Weise dazu, um bei auftretenden Störungen im Maker oder Packer nicht die gesamte Produktion unterbrechen zu müssen, indem kurze Stillstandzeiten des Makers bzw. Packers überbrückt werden. Ein FiFo-Speicher der hier verwendeten Art wird zum Beispiel in dem Dokument EP 1 445 218 A1 beschrieben.

Im Ausführungsbeispiel müssen die Artikel, die quergefördert werden, von dem Eingang 61 zunächst längs einer RTS-Vertikalstrecke 51 über mehrere Meter in die Höhe der obersten Ebene des Speichers 7 transportiert werden. Dort erfolgt in einem Umlenkabschnitt 54 eine Richtungsänderung um 90° in eine RTS-Horizontalstrecke 52. An die Förderstrecke 52 schließt sich eine Förderstrecke 53 an, mittels der die Stabartikel in den über die Förderebenen 71 laufenden, mit veränderlichen Schleifen arbeitenden Speicherweg gelangen.

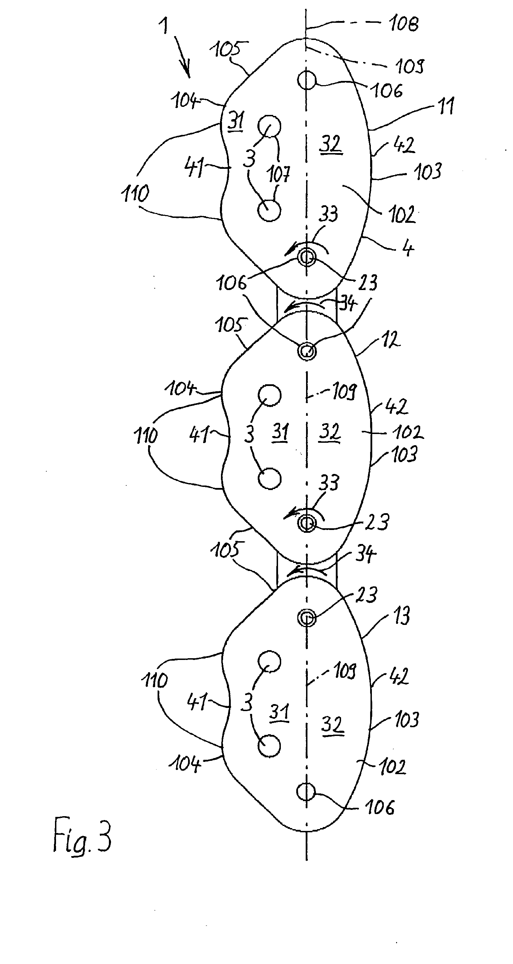

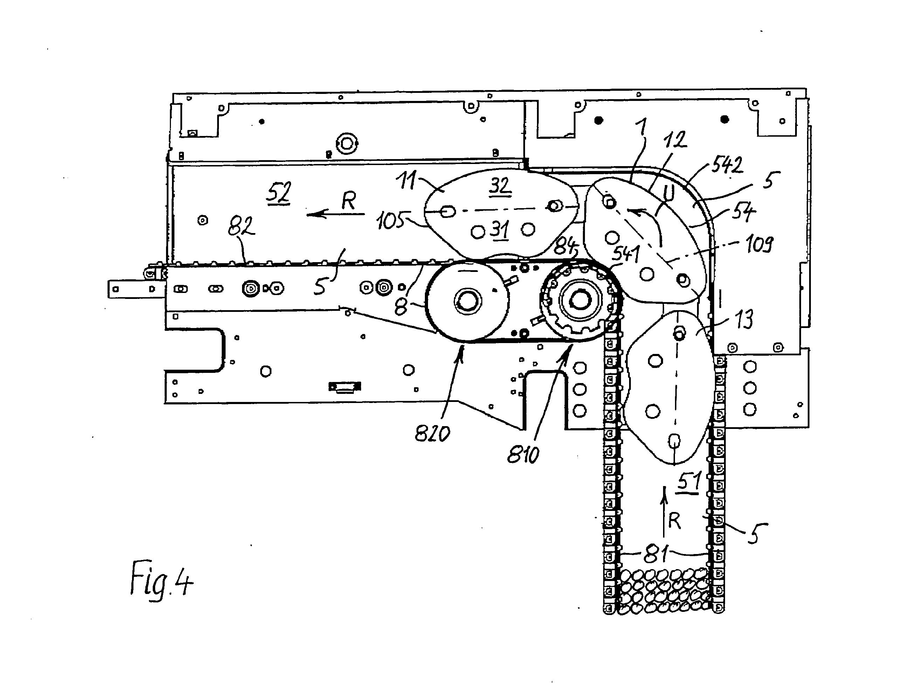

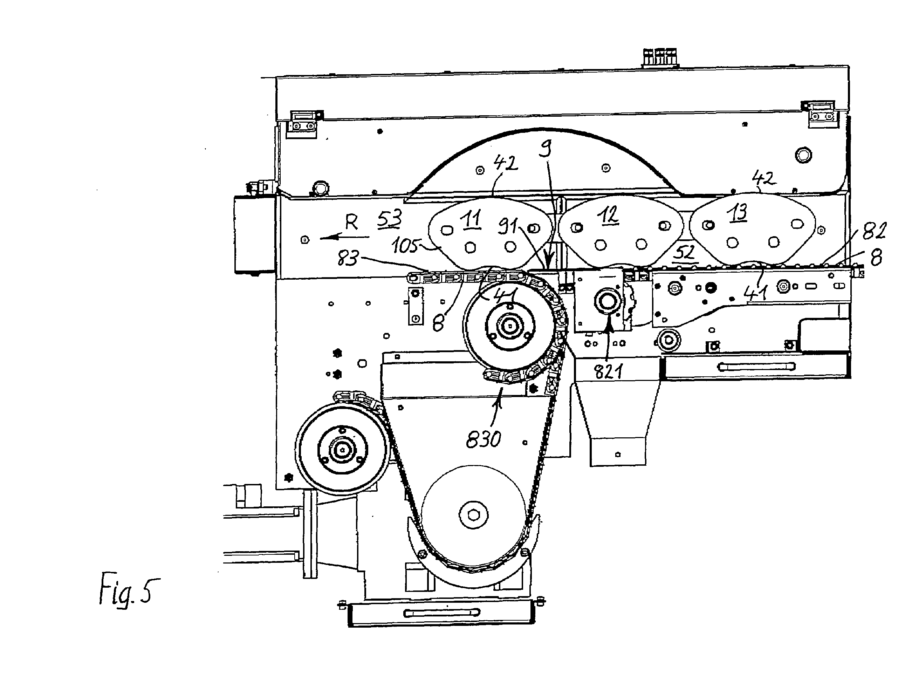

Die Förderstrecken 51, 52 und 53 sind Bestandteile eines Transportkanals 5, in dem ein erfindungsgemäßes Räummittel eingesetzt wird. Das erfindungsgemäß an den Kanal 5 angepasste Räummittel wird im einzelnen in Fig. 2 und 3 dargestellt. Es handelt sich im Ausführungsbeispiel um einen Verbund 1, der aus drei Gliedelementen 10 gebildet ist. In Fig. 4 und 5 sind die Positionen des Verbunds 1 im Bereich des Kanal-Umlenkabschnitts 54 (Stelle I in Fig. 1) sowie im Bereich einer Übergabestelle 9 zwischen Förderelementen 82, 83 (Stelle II in Fig. 1) dargestellt. Der Gliedelemente-Verbund 1 wird von Förderelementen 8 durch den Kanal 5 bewegt, die zum regulären Transport der Stabartikel vorgesehen sind. Der Kanalabschnitt der RTS-Vertikalstrecke 51 wird in üblicher Weise durch zwei Förderketten 81 gebildet, zwischen denen die Stabartikel in Parallellage zu den Ketten und quer zur Förderrichtung R transportiert werden. Die Lage von Stabartikeln ist aus Fig. 4 im unteren Bereich der Strecke 51 ersichtlich.

In der Darstellung der Fig. 1 und 4 durchläuft der Verbund 1 in dem 90°-Umlenkabschnitt 54 eine Linkskurve. An dem inneren Umlenkungs-Eckabschnitt 541 des Umlenkungsabschnittes 54 laufen Förderelemente 8, während der äußere Umlenkungs-Eckabschnitt 542 von Förderelementen frei bleibt. In der RTS-Horizontalstrecke 52 erfolgt der Transport mittels eines Förderelements 8 in Form einer Förderkette 82 an nur einer, in Fig. 4 unteren Kanalseite. Ein unmittelbar in horizontaler Förderrichtung R hinter der inneren Umlenkecke sich anschließender kurzer Abschnitt der Horizontalstrecke 52 zwischen Umlenkungen 810 und 820 bleibt von den Förderketten 81, 82 frei. Dort laufen nur an den Rändern des Kanals 5 Übergabe-Förderbänder 84.

Die Förder-Übergabestelle 9 in Fig. 5 entsteht dadurch, dass, in Förderrichtung R, an einer Förderelement-Umlenkstelle 821 die Förderkette 82 endet und der Transport dann durch eine in den Speicher 7 führende Förderkette 83 aufgenommen wird, die mittels eines Kettenrades an der Umlenkstelle 830 umgelenkt wird. Zwischen den Förderelement-Umlenkstellen 821 und 830 weist der Kanalboden ein Übergangsblech 91 der Übergabestelle 9 auf. So ist zwischen der RTS-Horizontalstrecke 52 und der FMR-Horizontalstrecke 53 ein kurzer antriebsloser Streckenabschnitt vorhanden. Der Kanal 5 weist längs der Horizontalstrecken 52, 53 nur die bodenseitigen Förderelemente 82, 83 auf.

Man erkennt, dass es für den Verbund 1 insbesondere an den Stellen I und II besonderer Führungsmaßnahmen bedarf, um ihn zuverlässig durch den Transportkanal 5 mittels der Förderelemente 8 zu bewegen. Die 90°-Richtungsänderung an der Stelle I muss bewältigt werden, und längs der Kanalabschnitte, in denen Förderelemente an einer Zwischenstelle einseitig und/oder beidseitig nicht vorhanden sind, muss der Verbund dennoch sicher transportiert und geführt bleiben. Diese Ziele werden mit dem erfindungsgemäßen Verbund 1 zum Beispiel in der Ausführungsform gemäß Fig. 2 und 3 erreicht.

Wie insbesondere aus Fig. 2 und 3 ersichtlich, umfasst der das Räummittel bildende Verbund 1 drei in einer Kette mit einfachem Strang aneinandergereihte Gliedelemente 10. Das in Förderrichtung vordere Gliedelement bildet einen Räum- und Führungskörper 11, das daran in Kettenverbindung 2 angelenkte Gliedelement einen Führungskörper 12 und das gleichermaßen daran in Kettenverbindung 2 angelenkte Gliedelement einen Führungskörper 13. Die drei Gliedelemente sind übereinstimmend ausgebildet. Jedes Gliedelement 10 weist die Gestalt einer Scheibe auf, die im stirnseitigen Querschnitt die Form eines Kreisring-Sektors hat und an eine Mandarinenform 4 erinnert. Der Umfang der Scheibe ist durch eine Mantelfläche 101 mit einer Scheibenhöhe bestimmt, die dem durch den Abstand der Förderketten 81 bestimmten Durchmesser des Kanal-Streckenabschnitts 51 derart angepasst ist, dass die Gliedelemente 10 zwischen diesen Förderketten 81 im Reibschluss zum Aufwärtstransport mitgenommen werden. Dazu trägt bei, dass jedes Gliedelement 10 aus einem materialelastischen formstabilen Kunststoff-Schaummaterial mit einem leichten Übermaß gegenüber dem genannten Kanaldurchmesser zwischen Anlagestellen gefertigt ist. Der Schaumstoffkörper ist mit einer Gleitschicht oder -abdeckung ummantelt, um die Mantelfläche 101 zu bilden. Diese Gleitfläche behindert die Mitnahme-Einklemmung nicht, bildet aber in dem Umlenkabschnitt 54 eine Gleitanlage gegen die im Bogen äußere Kanalwand.

Die Mandarinen-Scheibenform der Stirnseiten des Scheibenelements entsteht dadurch, dass das Gliedelement 10 an einer Mantelseite 103 eine im wesentlichen mit Kreisbogen konvexe Führungsfläche 42 und an der gegenüberliegenden Mantelseite 104 eine im wesentlichen mit kürzerem Kreisbogen konkave Führungsfläche 41 aufweist. Die Mantel-Schmalseiten 105 zwischen den Führungsflächen 41, 42 sind durch gleich ausgebildete gerade Schrägflächen bestimmt, die mit Rundungen in die Flächen 41, 42 übergehen.

Im Bereich der Rundungen zwischen den Schmalseiten 105 und der Führungsfläche 42 sind senkrecht zu den Stirnflächen 102 sich erstreckende Durchgangslöcher 106 vorgesehen, die zum Beispiel durch in das Schaumstoffmaterial eingesetzte Buchsen gebildet werden können. Wie aus Fig. 2 und 3 ersichtlich, sind die Löcher 106 zur Gelenkverbindung 2 zwischen benachbarten Gliedelementen 11, 12 bzw. 12, 13 vorgesehen. Jede Gelenkverbindung 2 umfasst eine flache Gelenkplatte 21, die einen Zwischensteg bildet und in zur Mantelfläche 101 senkrechte Schlitzausnehmungen 22 an den Schmalseiten 105 einfassen, um jeweils mittels einer Gelenkachse 23 z.B. in Form eines Gelenkbolzens, die in den Löchern 106 festgelegt ist, angelenkt zu werden. Die Ketten-Gelenkverbindung 2 ist unter Nutzung des Raums zwischen benachbarten Schmalseiten so dimensioniert, dass zwischen aneinandergelenkten Gliedelementen 11, 12 bzw. 12, 13 zu benachbarten Schrägflächen hin aus grader Kettenlinie 108 eine Ablenkung von mindestens 90° zugelassen wird. Die gerade Kettenausrichtung ist besonders deutlich aus Fig. 3 ersichtlich. Die Durchgangslöcher 106 zum Anschluss oder zur Aufnahme von Gelenkachsen 23 stehen dort in der geraden Kettenlinie 108. Durch die zu den Stirnflächen 102 senkrecht stehenden Löcher 106 kann man eine entsprechend senkrechte, gedachte Körperebene 109 legen, die jeweils das Gliedelement 10 in einen durch die Fläche 41 und die Schmalseiten 105 begrenzten Teil 31 und einen durch die Führungsfläche 42 begrenzten Teil 32 unterteilt. Der Teil 31 bildet einen Massenteil, nämlich einen Körperteil, der das Gewicht und die Gewichtsverteilung des Gliedelements 10 bestimmt.

Senkrecht zu den Stirnflächen 102 sind im Rundungsbereich zwischen der Führungsfläche 41 und den Schmalseiten 105 Löcher 107 in das gewichtsmäßig leichte Schaummaterial eingearbeitet, die metallische Gewichtsstäbe 3 aufnehmen. Auf diese Weise ist das Gewicht, verteilt auf die Stellen der beiden Löcher 107, in dem Teil 31 konzentriert. Durch die Aufteilung auf die beiden Lochstellen erfolgt eine Aufteilung auf den vorderen Bereich und den hinteren Bereich des Gliedelements 10. Man erkennt, dass der durch die Stäbe 3 gebildete Schwerpunkt oder die entsprechende Schwerpunktebene des Gliedelements 10 im Bereich zwischen dem in Förderrichtung vorderen Ende des Gliedelements 10 und der Gelenkachse 23 liegt. Dadurch werden an jeder Gelenkverbindung 2 permanente Kippmomente 33 und 34 eingeleitet. Dies ist aus der geraden Anordnung in Fig. 3 ersichtlich. Die beschriebene Gewichtsverteilung lässt die Gliedelemente 11 und 12 bzw. die Gelenkplatten 21 mit Kippmomenten 33, 34 um die Gelenkachsen 23 zur Seite der konkaven Führungsfläche 41 hin kippen. Diese Maßnahme zur Führung des Verbundes 1 ist auf den Umlenkabschnitt 54 des Kanals 5 angepasst.

Man erkennt aus Fig. 4, dass die konkave Führungsfläche 41 an die konvexe Eck-Krümmung der inneren Ecke 541 des Umlenkungsabschnitts 54 angepasst ist, während die konvexe Führungsfläche 42 an eine konkave Krümmung der äußeren Ecke 542 des Umlenkungsabschnittes 54 angepasst ist. Wenn nun der Verbund 2 nach oben aus dem vertikalen Streckenabschnitt 51 durch Klemmförderung mittels der Ketten 81 heraustritt, wird zunächst der Räum- und Führungskörper 1 entsprechend der Umlenkrichtung U des Umlenkungsabschnitts 54 durch Anlage an der inneren Ecke 541 abgekippt bzw. bis zu einem gewissen Maß selbsttätig aus dem vertikalen Weg in den horizontalen Weg der Strecke 52 geführt. In der gleichen Weise unterstützt der mittlere Führungskörper 12 den Richtungslauf des Verbundes 1. Eine zusätzliche eingeprägte Ablenkung für jeden Körper 11, 12, 13 in U-Richtung entsteht dadurch, dass die Gewichtsmasse in jedem Körper auf die beiden Stäbe 3 verteilt ist, so dass die Kippmomente beim Abkippen größer werden. Die Wirkung wird in Kombination mit dem Zug- und/oder Schiebetransport durch die Förderelemente 8 erzielt.

Man erkennt aus Fig. 4 auch, dass der Räum-/Führungskörper 11 aufgrund der Kettenlänge des Verbundes mit den drei Elementen 10 auf die Förderkette 82 gelangt, noch bevor der hintere Führungskörper 13 den Bereich der Förderketten 81 verlässt. So wird der Verbund 1 durch Schub- und/oder Zug sicher durch die durch den Umlenkabschnitt 54 gebildete Engpassstelle geführt.

Im Ausführungsbeispiel kommen die Gliedelemente 10 des Verbundes 1 auf der Förderkette 82 mit den konvexen Rundungen auf der Seite der konkaven Führungsfläche 41 zu stehen. Die Rundungen bilden Füße 110, deren Eingriff in die horizontal laufende Kette 82 dadurch unterstützt wird, dass die Gewichtsstäbe 3 im Bereich der Rundungen liegen.

Die Gewichtsverteilung ist auch an der Übergabestelle 9 in Fig. 5 von Vorteil. Dort gelangt zunächst der Räum-/Führungskörper 11 mit den fußartigen Rundungen 110 auf die Förderkette 83, indem er mittels der Körper 12, 13 über das Übergangsblech 91 geschoben wird. Die schmalen Kontakt-Gleitflächen begünstigen das Schieben über das Übergangsblech 91. Im übrigen bilden die schmalen Kontaktvorsprünge der Rundungsfüße 110 einen besonders guten Eingriff in die Förderketten. Durch Zug und/oder Schub gelangen gleichfalls die Körper 12, 13 über das Übergangsblech 91. Insbesondere auf dem Übergangsblech 91 zwischen den Führungsketten 82, 83 bleiben Stabartikel liegen, wenn die Produktion gestoppt wird. Das Entfernen von Stabartikeln in solchen Bereichen, die dort zumeist im Block liegen bleiben, wird durch den Räum-Verbund 1 sicher und einfach bewerkstelligt. Dabei bildet die der Kettenanlenkung abgewandte schräge Mantelfläche der Schmalseite 105 in Verbindung mit dem innigen Eingriff der Rundungsfüße 110 eine Räumfläche, mit der die Stabartikel zuverlässig aus dem Kanal 5 entfernt werden.

Da beim Produktionsstopp liegenbleibende Stabartikel nicht den gesamten Kanalquerschnitt ausfüllen, arbeitet der erfindungsgemäße Verbund 1 ohne Beeinträchtigung, wenn er aus der vertikalen Steigungsstrecke 51 in die Strecken 54, 52 und 53 gelangt, in denen aufgrund größerer Kanaldurchmesser auf der Seite der konvexen Führungsfläche 42 ein Spalt bleibt. Dieser Spalt gewährleistet, dass der Verbund 1 in solchen Kanalstrecken an der Seite der Flächen 42 zum Transport frei bleibt.

Die Gelenkverbindung 2 erhält so viel Spiel, dass, zusätzlich zu der Kippbewegung um die Achsen 23, bis zu einem gewissen Grad eine Seitenkippbarkeit in die beiden anderen Raumrichtungen zugelassen wird. Insbesondere erreicht man dadurch, dass der Verbund 1 ungehindert durch die geneigten Schleifenkanäle des Speichers 7 laufen kann. Insbesondere ein Übergangsblech an einer nicht dargestellten, der Übergabestelle 9 entsprechenden Übergabestelle im Bereich vor dem Ausgang des Speichers 7 wird gleichermaßen einfach und zuverlässig von Stabartikeln wie das Übergangsblech 91 befreit.

Der Einsatz des erfindungsgemäßen Verbunds 1 ist sehr einfach. Er wird bequem in den Eingang 61 mit den Rundungsfüßen 110 bzw. der konkaven Führungsfläche 41 nach unten eingelegt. Ein dort vorhandener, gegensinnig zu dem Abschnitt 54 gekrümmter Umlenkungsabschnitt 55 wird ohne Behinderung passiert, da in einem solchen Umlenkabschnitt an beiden Kanalseiten Förderelemente vorhanden sind, die den Verbund 1 zum Transport erfassen. Der erfindungsgemäße Gliedelemente-Verbund 1 wird dann zum Reinigen durch die RTS-Einrichtung 6 und sämtliche Schleifenstrecken bzw. Kanäle des Speichers 7 transportiert. Am Ausgang 72 gelangt der Verbund 1 in einen Schacht, aus dem er entnommen wird.

Man erkennt, dass das erfindungsgemäße Räummittel nach Maßgabe seiner Merkmale in Anpassung an sehr unterschiedliche Kanal-Einsatzorte gestaltet werden kann. Insbesondere kann in der Gliedelementkette auch ein hinteres Element bei entsprechender Anpassung des vorauslaufenden Elements mit einer Räumfläche versehen werden. Exzentrische Gewichtsverteilungen können vorgesehen werden, um gleichermaßen ein Abkippen des Gliedelemente-Verbunds zum Durchgang in einer Linkskurve und einer Rechtskurve zu begünstigen. Statt gerundeter Ausnehmungen und/oder Vorsprünge können auch andere Formgeometrien genutzt werden, um mittels solcher Formanpassungen an Kanalgegebenheiten den Durchgang durch insbesondere abwinkelnde Kanalabschnitte zu begünstigen.

## Patentansprüche

1. Räummittel zum Entfernen von stabförmigen Artikeln der tabakverarbeitenden Industrie aus einem die Artikel zwischen Einrichtungen einer Produktionsanlage fördernden Transportkanal (5), der wenigstens eine nach oben und/oder unten gerichtete Kanal-Förderstrecke (51), eine dazu quer gerichtete Kanal-Förderstrecke (52, 53) und einen Umlenkungsabschnitt (54) zwischen den Strecken aufweist sowie mit Förderelementen (8) ausgestattet ist, die die stabförmigen Artikel längs der Kanalstrecken fortbewegen, **dadurch gekennzeichnet, dass** das Räummittel durch einen Gliedelemente-Verbund (1) gebildet ist, der mittels der für den Produkttransport vorgesehenen Förderelemente (8) in dem Transportkanal (5) förderbar ist und durch wenigstens zwei in Transportrichtung (R) wirkverbunden aneinandergereihte, einer Richtungsänderung folgende Gliedelemente (10) gebildet ist.

2. Räummittel nach Anspruch 1, **dadurch gekennzeichnet , dass** wenigstens ein Gliedelement (10), vorzugsweise wenigstens das in Förderrichtung (R) vordere Gliedelement als Räumkörper (11) und dieser sowie wenigstens ein hinteres Gliedelement (10) als den Verbund (1) durch den Umlenkabschnitt (54) führende Führungskörper (12, 13) ausgebildet sind.

3. Räummittel nach Anspruch 1 oder 2, **dadurch gekennzeichnet, dass** wenigstens ein Gliedelement (10) mit einer Formkontur (4) versehen ist, die das Kippen in die Umlenkrichtung (U) in den Umlenkungsabschnitt (54) begünstigt.

4. Räummittel nach Anspruch 3, **dadurch gekennzeichnet , dass** wenigstens ein Gliedelement (10) eine konkave Führungsfläche (41) aufweist, die an eine konvexe Krümmung eines inneren Umlenkungs-Eckabschnitts (541) des Umlenkungsabschnitts (54) angepasst ist.

5. Räummittel nach Anspruch 3 oder 4, **dadurch gekennzeichnet, dass** wenigstens ein Gliedelement (10) eine konvexe Führungsfläche (42) aufweist, die an eine konkave Krümmung eines äußeren Umlenkungs-Eckabschnitts (542) des Umlenkungsabschnitts (54) angepasst ist.

6. Räummittel nach einem der Ansprüche 3 bis 5, **dadurch gekennzeichnet, dass** wenigstens ein Gliedelement (10) mit einer Formkontur (4) ausgebildet ist, die den Verbund (1) durch den wenigstens einen Umlenkungsabschnitt (54) mit einer Richtungsänderung bis wenigstens 90° führt.

7. Räummittel nach einem der Ansprüche 3 bis 6, **dadurch gekennzeichnet, dass** wenigstens ein Gliedelement (10) durch ein Scheibenelement mit jeweils die Form eines Kreisring-Sektors aufweisenden Stirnseiten (102) gebildet ist.

8. Räummittel nach einem der Ansprüche 1 bis 7, **dadurch gekennzeichnet, dass** wenigstens ein Gliedelement (10) quer zur Förderrichtung (R) zwischen gegenüberliegenden, zur Anlage an Kanal-Förderelemente (8) kommenden Flächen (41, 42) materialelastisch nachgiebig ausgebildet ist, um entlang wenigstens eines Kanal-Förderabschnitts (51) reibkraftschlüssig zwischen zwei Förderelementen (81) im Klemmgriff transportiert zu werden.

9. Räummittel nach Anspruch 8, **dadurch gekennzeichnet , dass** das Gliedelement (10) aus einem formstabilen elastischen Schaumstoffmaterial gebildet ist, das vorzugsweise an Führungsflächen (101) mit Gleitbelag versehen ist.

10. Räummittel nach Anspruch 8, **dadurch gekennzeichnet , dass** das Gliedelement aus einem elastischen Profilkörper vorzugsweise als extrudiertes Formstück gebildet ist.

11. Räummittel nach einem der Ansprüche 1 bis 10, **dadurch gekennzeichnet, dass** wenigstens ein, vorzugsweise das vordere Gliedelement (10) mit einer Gewichtsmassenverteilung ausgestattet ist, die es im geförderten Verbund (1) in die Umlenkrichtung (U) des Umlenkabschnittes (54) kippen lässt.

12. RäummittelnachAnspruch 11, **dadurch gekennzeichnet, dass** wenigstens ein Gliedelement (10) eine dem inneren Umlenkungs-Eckabschnitt (541) zugeordnete Massenverteilung mit einem Massenteil (31) aufweist, in dem die das Gewicht des Gliedelements (10) bestimmende Masse konzentriert ist.

13. Räummittel nach Anspruch 12, **dadurch gekennzeichnet, dass** die Gewichtsmasse durch wenigstens ein vorzugsweise metallisches Block- oder Stabelement (3) gebildet ist, das in ein den Gliedelementkörper bildendes Leichtmaterial eingelassen ist.

14. Räummittel nach Anspruch 12 oder 13, **dadurch gekennzeichnet , dass** in dem die Gewichtsmasse des Gliedelements (10) bestimmenden Teil in Bezug auf die Transportrichtung (R) eine vorzugsweise punktuelle Massenaufteilung mit einer Masse (3) im vorderen Bereich und einer Masse (3) im hinteren Bereich des Gliedelements (10) vorgesehen ist.

15. Räummittel nach einem der Ansprüche 12 bis 14, **dadurch gekennzeichnet, dass** der Massenteil (31) zwischen einer benachbarte Gliedelemente (10) aneinander anlenkenden Achse (23) und einer dem inneren Umlenkungs-Eckabschnitt (541) zugeordneten Seite (104) des Gliedelements (10) ausgebildet ist.

16. Räummittel nach einem der Ansprüche 1 bis 15, **dadurch gekennzeichnet, dass** zwei Gliedelemente zur direkten Anlenkung in unverlierbarer oder loser Verbindung miteinander vorgesehen sind.

17. Räummittel nach einem der Ansprüche 1 bis 15, **dadurch gekennzeichnet, dass** zwei Gliedelemente (10) mittelbar über wenigstens ein Verbindungsglied (21) miteinander verbunden sind.

18. Räummittel nach einem der Ansprüche 1 bis 17, **dadurch gekennzeichnet, dass** die Verbindung (2) zwischen benachbarten Gliedelementen (10) einen Ablenkungswinkel bis wenigstens 90° ausbildet.

19. Räummittel nach einem der Ansprüche 1 bis 18, **dadurch gekennzeichnet, dass** die Kettenverbindung (2) zwischen benachbarten Gliedelementen (10) eine Bewegung in wenigstens zwei Raumrichtungen zulässt.

20. Räummittel nach einem der Ansprüche 1 bis 19, **dadurch gekennzeichnet, dass** wenigstens das im Verbund (1) vordere sowie das hintere Gliedelement (11, 13) und vorzugsweise jedes Gliedelement (10) zum Fördereingriff mit den Förderelementen (8) ausgebildet ist.

21. Räummittel nach einem der Ansprüche 1 bis 20, **dadurch gekennzeichnet, dass** sämtliche Gliedelemente (10) gleich ausgebildet sind.

22. Räummittel nach einem der Ansprüche 1 bis 21, **dadurch gekennzeichnet, dass** der Verbund (1) drei aneinandergereihte Gliedelemente (11, 12, 13) umfasst.

23. Räummittel nach einem der Ansprüche 1 bis 22 zur Verwendung in einem Transportkanal (5), der wenigstens eine vorzugsweise vertikale Zufuhrstrecke (51) einer Stabübertragungseinrichtung (RTS) (6) und wenigstens vorzugsweise horizontale Strecken (52, 53) der RTS-Einrichtung (6) und einer einen flexiblen Massenstrom herstellenden Speichereinrichtung (FMR) (7) aufweist.

24. Räummittel zum Entfernen von in einem Kanal (5) vorhandenen Artikeln mit einem Räumkörper (11), der durch den Kanal (5) bewegbar und zumindest abschnittsweise im Querschnitt elastisch deformierbar ausgebildet ist, **dadurch gekennzeichnet , dass** der Räumkörper (11) mit wenigstens einem Führungskörper (12, 13) wirkverbunden ist.

25. Räummittel nach Anspruch 24, **dadurch gekennzeichnet , dass** der Räumkörper (11) mit dem Führungskörper (12, 13) gelenkig wirkverbunden ist.

26. RäummittelnachAnspruch24oder25, **dadurch gekennzeichnet, dass** der Räumkörper (11) an seinem in Bezug auf die Transportrichtung (R) hinteren Ende eine Gelenkachse (23) zur Verbindung mit dem an ihn angelenkten Führungskörper (12) aufweist und der Schwerpunkt des Räumkörpers (11) im Bereich zwischen dem vorderen Ende des Räumkörpers (11) und der Gelenkachse (23) zum Einleiten eines permanenten Kippmoments angeordnet ist.
